# FASCICULE DE BREVET EUROPEEN

(11) **EP 0 601 904 B1**
(45) Date de publication et mention de la délivrance du brevet: **12.08.1998**
(21) Numéro de dépôt: 93402806.9
(22) Date de dépôt: 18.11.1993
(51) Int. Cl.: G01C 21/20

(54) **Système de navigation pour véhicule**
Fahrzeugnavigationssystem
Vehicle navigation system

(30) Priorité: 11.12.1992 FR 9214960
(43) Date de publication de la demande: 15.06.1994
(73) Titulaire: AUTOMOBILES PEUGEOT, 75116 Paris (FR); AUTOMOBILES CITROEN, 92200 Neuilly-sur-Seine (FR)
(72) Inventeur: Rostan, Hervé, F-78500 Sartrouville (FR); Deredec, Jean-François, F-92250 La Garenne-Colombes (FR)
(74) Mandataire: Habasque, Etienne Joel Jean-François

(56) Documents cités:
- EP-A- 0 346 492
- EP-A- 0 372 840
- NTZ NACHRICHTENTECHNISCHE ZEITSCHRIFT vol. 36, no. 4, Avril 1983, BERLIN DE, pages 220 - 223, XP002048335 A.FUCHS ET AL. 'EVA-Netzabbildung und Routensuche für ein fahrzeugautonomes Ortungs- und Navigationssystem'
- VNIS'89 CONFERENCE RECORD 11 - 13 Septembre 1989, TORONTO, ONTARIO, CA, pages 170 - 175, XP002048336 A.G. HOBEIKA 'A Route Guidance System under Modified Network Conditions'
- PROCEEDINGS OF THE 1991 AMERICAN CONTROL CONFERENCE 26 - 28 JUNE 1991, BOSTON, MA, US, pages 2568 - 2573, XP002048337 EUA, Y. ZHAO ET AL. 'An adaptive Route-Guidance Algorithm for Intelligent Vehicle Highway Systems'
- VNIS'89 CONFERENCE RECORD 26 - 28 JUIN 1991 1989, TORONTO, ONTARIO, CA, pages 139 - 145, XP002048338 T. SAITO ET AL. 'Automobile Navigation System Using Beacon Information'

## Description

La présente invention concerne un procédé et un dispositif de calcul d'un itinéraire de navigation notamment d'un véhicule automobile, dans une zone géographique donnée.

On connait déjà dans l'état de la technique, différents procédés et dispositifs de ce type pour le calcul d'un itinéraire de navigation d'un véhicule automobile dans une zone géographique donnée entre un point d'origine et un point de destination, à l'aide d'un calculateur d'itinéraire dans lequel est chargé au moins un algorithme de calcul d'itinéraire, associé à une base de données cartographiques, représentatives de la zone géographique donnée.

Cette base comporte en général au moins deux ensembles d'éléments identifiés, à savoir un ensemble de noeuds correspondant à des carrefours et un ensemble d'arcs correspondant à des voies aboutissant à ces noeuds, auxquels sont affectées des caractéristiques d'intérêt pour le calcul d'itinéraire.

Ces différents ensembles d'éléments identifiés, permettent de définir par exemple la présence de feux de signalisation à un carrefour, différentes contraintes de circulation liées à celui-ci, la longueur des voies aboutissant à ces carrefours, la rapidité de parcours de celles-ci, etc...

Ces différents attributs permettent aux algorithmes de calcul de déterminer le meilleur itinéraire possible pour aller d'un point d'origine à un point de destination, entrés par un utilisateur dans le calculateur, et différentes informations d'aide à la navigation du véhicule, qui sont ensuite transférées par ce calculateur à des moyens d'affichage, pour informer l'utilisateur de l'itinéraire optimal calculé.

Des descriptions de tels procédés et dispositifs peuvent être trouvées dans la demande de brevet Français n° 91 07 237 aux noms des Demanderesses et dans les documents EP-A-0 346 492, EP-A-0 372 840, WO-A-8 809 974, NTZ NACHRICHTENTECHNISCHE ZEITSCHRIFT, volume 36, n° 4, Avril 1983, Berlin et VNIS 89 Conference Record 11-13 septembre 1989, Toronto, Canada, A.G HOBEIKA " A route guidance system under modified network conditions", pages 170-175.

Les systèmes d'aide à la conduite connus dans l'état de la technique, peuvent se dissocier en deux grandes familles, à savoir les systèmes basés sur l'infrastructure et les systèmes autonomes.

Les systèmes d'aide à la conduite ou de navigation basés sur l'infrastructure reçoivent des informations de guidage par des moyens de communication SOL/VEHICULE (par exemple par des balises de l'infrastructure routière).

Les systèmes autonomes de navigation s'appuient pour la plupart sur des moyens cartographiques embarqués à bord du véhicule pour fournir ces différentes informations de guidage après un calcul d'itinéraire.

De nombreux algorithmes mathématiques permettent de calculer un chemin dans un graphe à partir d'un couple de points d'origine et de destination fixé.

Ces algorithmes utilisés de manière classique ne sont pas adaptés au caractère dynamique d'un calcul d'itinéraire embarqué, c'est à dire dans lequel l'un des points, par exemple celui d'origine, est susceptible d'être modifié avant la fin du calcul.

De plus, ces algorithmes sont relativement lents et ne permettent pas d'obtenir rapidement un itinéraire.

Le but de l'invention est donc de résoudre ces problèmes en proposant un procédé et un dispositif de calcul d'itinéraire, qui soient simples, fiables et qui puissent prendre en compte des modifications du point d'origine en adaptant l'itinéraire proposé au trajet suivi par le conducteur du véhicule.

A cet effet, l'invention a pour objet un procédé de calcul d'un itinéraire de navigation notamment d'un véhicule automobile, dans une zone géographique donnée entre un point d'origine et un point de destination, à l'aide d'un calculateur d'itinéraire, dans lequel est chargé au moins un algorithme de calcul d'itinéraire, associé à une base de données cartographiques représentatives de la zone géographique donnée, cette base comportant au moins deux ensembles d'éléments identifiés à savoir un ensemble de noeuds correspondant à des carrefours et un ensemble d'arcs correspondant à des voies aboutissant à ces noeuds, auxquels sont affectées des caractéristiques d'intérêt pour le calcul d'itinéraire, l'algorithme de calcul étant initialisé sur le point de destination, et étant adapté pour calculer un itinéraire en remontant de ce point de destination vers le point d'origine, caractérisé en ce que l'algorithme de calcul est un algorithme à progression d'une onde dans un graphe, associé à une méthode de tri par arbre binaire, et délimite dans un premier temps une zone de calcul restreinte dans la base, puis dans un second temps étend cette zone de calcul au reste de celle-ci, afin de délivrer rapidement un premier itinéraire, en réutilisant les données de calcul relatives au premier itinéraire, lors de l'extension de la zone de calcul au reste de la base, pour affiner le calcul d'itinéraire au fur et à mesure.

Selon un autre aspect, l'invention a également pour objet un dispositif de calcul pour la mise en oeuvre du procédé tel que décrit précédemment.

L'invention sera mieux comprise à l'aide de la description qui va suivre, donnée uniquement à titre d'exemple et faite en se référant aux dessins annexés, sur lesquels :
- les Fig.1 à 6 illustrent différentes phases d'un calcul d'itinéraire; et
- la Fig.7 représente un schéma synoptique d'un dispositif pour la mise en oeuvre du procédé selon l'invention.

Une base de données cartographiques est constituée par toute base d'information pouvant donner une représentation de plans de ville ou de réseaux routiers susceptibles d'être exploités par un calculateur d'itinéraire, c'est à dire toute base comportant une notion de graphe orienté (informations numériques) associé à une correspondance cartographique (informations humainement interprétables).

Le réseau ainsi décrit repose sur au moins deux ensembles d'éléments identifiés, à savoir :
- un ensemble d'éléments appelés SOMMETS ou NOEUDS, chaque noeud étant associé à ses coordonnées dans le système d'axes de la partie de carte numérisée; et
- un ensemble d'éléments de couples ordonnés de sommets appelés SEGMENTS ou ARCS, chaque arc pouvant être décomposé en une succession de points physiques décrivant sa courbure et étant lié à des notions interprétables par l'utilisateur (nom de route, nom de rue, etc...).

Un plan de ville (ou de réseau routier) est représenté par un ensemble de rues (ou de routes) et de carrefours. Il s'identifie très bien à un graphe orienté peu dense, dans lequel chaque carrefour est un NOEUD (ou SOMMET) et toute partie de rue entre deux carrefours est un ARC ou SEGMENT. Chaque segment ou arc peut être orienté afin de pouvoir décrire les sens de circulation et les sens uniques.

Connaissant la liste de tous les sommets successeurs adressables de chaque sommet, il est possible de déterminer une séquence d'arcs (ou de sommets) pour aller d'un point à un autre. Si l'on affecte des caractéristiques d'intérêt tel qu'un POIDS, encore appelé POTENTIEL, à chaque sommet (ou arc), on peut influencer le parcours d'un graphe et "orienter" un calcul de séquence d'arcs en fonction de certains critères. Ceci est le rôle des ALGORITHMES de recherche de chemin, encore appelés algorithmes de calcul d'itinéraire, pour aller d'un point d'origine à un point de destination.

Pour calculer un chemin dans un tel graphe orienté, chaque sommet doit être identifié par un nom (un numéro) et les liens entre sommets doivent être caractérisés par un potentiel. En première approche, ce critère est la longueur du segment ou de l'arc liant deux sommets. Cependant, ce critère peut être remodulé par différents paramètres tels que des notions de confort ou de rapidité, etc... On verra que le fait de considérer des critères autres que celui de la distance minimale peut nécessiter une approche particulière au niveau de l'algorithme de calcul de chemin.

Les problèmes de cheminement dans les graphes, et en particulier la recherche du plus court chemin, sont des problèmes classiques de la théorie des graphes et de nombreux algorithmes mathématiques décrivent différentes solutions à ce problème. Tous ces algorithmes ont pour objectif de fournir une liste d'arcs ou de sommets qui permet de décrire le moyen de se rendre d'un point d'origine à un point de destination à travers le graphe, en tenant compte d'arcs interdits ou de sommets à éviter. Les éléments manipulés faisant abstraction des réalités physiques, il devient possible d'imaginer le calcul du chemin selon différents critères du monde réel. Une même base algorithmique peut fournir un itinéraire en prenant en compte soit la notion de distance, soit la notion de temps, soit un subtil dosage de ces différentes données, comme paramètres de calcul.

Ces algorithmes sont particulièrement bien adaptés aux calculs d'itinéraire statiques, c'est à dire dont les conditions initiales (point de départ, point de destination, nombre d'éléments du graphe à analyser) sont toujours d'actualité à la fin du calcul.

De plus, étant donné la quantité de données à manipuler dans de telles applications, certains algorithmes se prêtent plus ou moins bien à un développement logiciel efficace.

Dans le cas d'un calcul d'itinéraire embarqué et du fait du déplacement possible du véhicule durant ce temps de calcul, le choix d'un algorithme est dicté par la nécessité de pouvoir disposer d'une organisation de données capable de conserver et de restituer l'ensemble des itinéraires du graphe rejoignant le point de destination, afin de fournir à tous moments, et quels que soient les actions et les choix du conducteur, les informations de guidage.

Ceci implique une notion de calcul d'itinéraire dynamique.

Les bases de données cartographiques, destinées à être exploitées par des fonctions de recherche opérationnelle, représentent en quelque sorte une transcription du monde réel en un graphe orienté.

Ce graphe se doit d'être "orienté" car il semble incontournable que le cheminement calculé tienne compte des sens uniques de circulation dans le cas d'une exploitation d'aide à la navigation. Cela pose alors le problème de la fiabilité et de la mise à jour de la base de données. En effet, un calcul d'itinéraire qui ne pourrait fournir en temps réel qu'un seul chemin pour mener le conducteur à sa destination risquerait d'être souvent inopérant dans le cas de changement de sens unique, d'erreur de numérisation dans la base de données, d'obstruction de voie par des travaux ou bien simplement lorsque l'utilisateur lui-même ne suit pas, volontairement ou non, l'itinéraire recommandé en première approche. C'est en ce sens que l'on parle de calcul d'itinéraire dynamique, c'est à dire de calcul capable de fournir en permanence et instantanément (sans nouveau calcul d'itinéraire un chemin pour rejoindre une destination, quelle que soit l'évolution du véhicule à l'intérieur du graphe considéré.

Cette caractéristique peut être obtenue soit par un calculateur puissant capable de recalculer en permanence un nouvel itinéraire en considérant à chaque fois un nouveau point d'origine, ceci dans un temps très court (par rapport à la vitesse d'évolution du véhicule) soit par le choix d'un algorithme approprié et dont la mise en oeuvre logicielle est dédiée à une telle application.

La présente invention se rapporte au cas le plus répandu actuellement à savoir celui où la puissance du calculateur de navigation ne permet pas de répondre en temps réel au non respect de l'itinéraire proposé en première approche, par un nouveau calcul complet du chemin.

Le confort d'utilisation d'un système de navigation autonome passe par la délivrance rapide d'un itinéraire lors d'une demande du conducteur.

En effet, le système doit être opérationnel très rapidement et montrer à l'utilisateur qu'il connait l'endroit où se trouve le véhicule et qu'il connait au moins un moyen pour accéder à la destination, même si le chemin proposé en première approche n'est pas exactement le chemin optimum en fonction du critère sélectionné et demande à être optimisé.

Cette caractéristique se traduit par deux fonctions de base du calculateur d'itinéraire :
1) il doit être capable de calculer rapidement un chemin à l'intérieur d'un graphe de taille quelconque, c'est à dire qu'il doit pouvoir réduire les données de calcul à un ensemble suffisant (sommets, arcs, caractéristiques, etc ...) pour pouvoir répondre en un temps donné relativement court à une demande de l'utilisateur. Cette contrainte passe généralement par une limitation du domaine d'étude.
2) il doit être capable de conserver la trace de l'itinéraire proposé en première approche, tout en autorisant une optimisation de celui-ci au fur et à mesure du déroulement de l'algorithme sur l'ensemble du graphe et doit préparer l'ensemble des autres chemins que peut prendre le conducteur, afin de pouvoir mener à bien sa fonction de guidage, quelles que soient les actions du conducteur.

Un algorithme permettant de remplir ces différentes fonctions est par exemple un algorithme de type DIJKSTRA bien connu des mathématiciens qui peut être associé ou non à une méthode de tri par arbre binaire de type classique.

Il s'avère en particulier que des algorithmes par exemple de type JOHNSON, dont on trouvera une description détaillée dans " Graphes, algorithmes et logiciels", M. MINOUX, G. BARTNIK chez DUNOD Informatique - 1986, page 132, semblent être les plus performants dans le cas d'un réseau routier qui peut être associé à un modèle de graphe peu dense. De plus, il est adapté aux besoins en ce sens qu'il progresse tel une onde dans un graphe, en se répandant d'un point fixé à l'ensemble des autres points du graphe, en délivrant successivement tous les plus courts chemins séparant les points du graphe du point de référence. Son organisation de données sous forme d'un arbre de poids minimal (arbre binaire dont les éléments sont en permanence mis à jour de façon que les éléments de poids les plus faibles soient situés à la racine de l'arbre et que les feuilles soient constituées par les éléments de poids les plus lourds) se montre particulièrement efficace dans le cas d'une approche informatique et dans le cas d'une réutilisation de données, comme cela sera décrit plus en détail par la suite.

A chaque modification du poids d'un élément de l'arbre orienté, on "remonte" l'élément associé à ce poids dans l'arbre jusqu'à trouver un élément de poids supérieur. L'arbre est initialisé en prenant comme racine le point ou sommet de destination dont le poids est nul (distance qui le sépare de lui-même). En traitant les sommets successeurs du sommet racine de l'arbre, c'est à dire en analysant les possibilités réelles de déplacement à l'intérieur du réseau routier, et en réorganisant l'arbre à chaque itération du calcul, la racine de l'arbre correspond donc à tout moment au sommet de poids (et donc à la distance) minimal. Chaque sommet racine traité est mémorisé par son "remplaçant" (et représente donc son successeur de plus faible poids) et est ensuite "rejeté" vers les feuilles de l'arbre puisque l'on est assuré de ne plus trouver de meilleur chemin pour celui-ci (dans la zone étudiée). Il est alors possible d'arrêter la recherche dès que le sommet racine est égal au second point de référence de l'itinéraire recherché.

D'après les remarques faites précédemment, on constate que la fonction de calcul d'itinéraire embarquée ne peut pas être perçue comme une simple fonction capable de fournir uniquement une liste d'arcs ou de sommets liant deux points distincts (comme cela serait le cas par exemple dans les calculs d'itinéraires statiques tels que ceux des services logistiques ou de préparation de route) mais qu'elle doit être traitée comme une fonction complexe gérant en interne un ensemble complet d'éléments et capable de délivrer un chemin à caractère évolutif.

Cet aspect dynamique de la fonction de calcul d'itinéraire dans un système embarqué amène la constatation suivante : la seule référence permanente d'un système de navigation en cours de fonctionnement est le point de destination à atteindre. Ceci induit la contrainte suivante : l'algorithme doit être initialisé sur le point de destination pour effectuer son calcul d'itinéraire et calculer ainsi l'ensemble des chemins qui permettent d'aboutir à celui-ci en remontant vers le point d'origine. Cela signifie en outre que les caractéristiques des arcs doivent être porteurs d'informations orientées selon cette configuration. Cette notion, non indispensable dans le cas d'un calcul d'itinéraire classique, prend toute son importance dans le cas d'une application embarquée, où il est intéressant de mettre à profit les temps morts du calculateur pour prévenir le non-suivi de l'itinéraire recommandé par le calculateur au conducteur.

En effet, en imposant cette condition initiale, on aboutit en final à un ensemble où tous les sommets du graphe sont associés au sommet auquel ils sont reliés, désignant ainsi le successeur de celui-ci pour le chemin calculé selon un critère particulier. En résumé, pour tout point du graphe, on est en mesure de proposer le chemin optimal pour assurer le guidage jusqu'au point de destination.

La quantité d'informations à manipuler lors d'un calcul d'itinéraire rend difficile l'évaluation d'un temps de réponse d'une fonction de calcul d'itinéraire. Cette difficulté est encore accentuée par le fait que cette quantité est directement liée à la taille de la zone numérisée et ne peut donc pas être considérée comme un facteur à peu près constant. Il est évident qu'un espace de même superficie d'une zone urbaine ou d'une zone rurale ne nécessite pas la même quantité d'informations pour une description numérique.

On ne peut donc pas définir de fonction de calcul de chemin universelle qui se contenterait de calculer une seule fois l'ensemble des chemins liant tout point du graphe à un point commun de destination. Ceci a pour conséquence l'exploitation d'une stratégie basée sur deux étapes. En effet, il faut tout d'abord pouvoir limiter le nombre des données globales gérées par le système de navigation à un sous-ensemble dont la taille permet à l'algorithme de fournir un premier itinéraire. Il faut ensuite pouvoir étendre la fonction de calcul à l'ensemble du graphe, pour deux raisons : tout d'abord pour optimiser si nécessaire le premier itinéraire calculé et ensuite pour se garantir d'un non suivi de celui-ci par le conducteur en préparant tous les autres chemins aboutissant au point de destination.

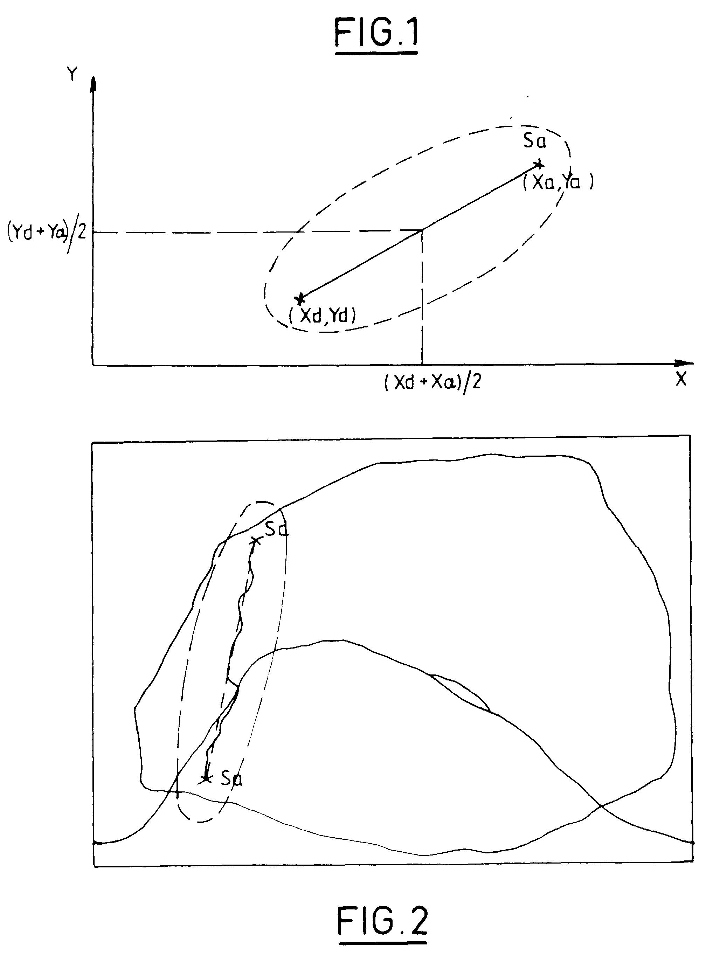

En règle générale, la réduction de l'intervalle d'étude correspondra à une zone fermée, englobant les points d'origine et de destination et décrivant un ensemble d'éléments cohérents entre eux (arcs contigus). Le modèle qui répond le mieux à ce besoin est constitué par une zone d'étude elliptique dont le grand axe est confondu avec une droite passant par les deux points de départ Sd et d'arrivée Sa et dont le centre correspond au point milieu de cette droite (voir Fig.1).

Si ce choix est satisfaisant dans le cas d'un calcul en fonction de la distance (la distance la plus courte sur le terrain s'approche souvent de la ligne droite séparant les deux points), on verra par la suite que cette limitation du domaine d'étude peut engendrer un problème important dans d'autres cas, selon le critère de recherche choisi.

Le procédé décrit ci-dessous est principalement ciblé sur les algorithmes de type DIJKSTRA du fait de leur simplicité de mise en oeuvre liée à l'organisation de leurs données, mais peut être étendu à la plupart des autres algorithmes du même type.

Une fois un premier calcul effectué dans un domaine restreint, deux possibilités existent : soit on recommence intégralement un calcul d'itinéraire mais cette fois-ci sur l'ensemble du graphe, ce qui suppose que l'on soit en mesure de stocker les informations issues du premier calcul pour continuer à les exploiter en parallèle (ce qui se traduit par une augmentation de la taille mémoire nécessaire du système), soit il faut, dès l'initialisation, envisager une méthode permettant de réutiliser le premier résultat et de l'optimiser en temps réel, tout en conservant une trace de l'information initiale avant que celle-ci soit remise à jour lors du nouveau déroulement de l'algorithme de recherche.

Cette deuxième possibilité qui est retenue s'avère entièrement satisfaisante à l'utilisation et a pour avantage de faciliter la gestion des données et de réduire le temps de calcul total.

En effet, dans un algorithme tel que celui de JOHNSON, expliqué très brièvement précédemment, on constate que le calcul est basé sur l'hypothèse de récurrence suivante : à chaque analyse d'un nouveau sommet, la structure de recherche (l'arbre dans ce cas) est organisée de façon similaire et cohérente. Il suffit donc, lors d'une analyse d'un domaine restreint, de mémoriser l'ordre de sortie des éléments traités pour organiser et initialiser la structure de recherche lors de l'extension à l'ensemble du graphe. Les poids des éléments réutilisés sont toujours justes mais sont susceptibles d'être modifiés lors de la considération d'un nombre plus important d'éléments, ce qui correspond donc à une optimisation du ou des chemins précédemment calculés.

De plus, dans le cas d'une organisation par arbre binaire, en partant d'une structure partiellement organisée, on réduit le nombre de transactions de données et par conséquent le temps total de calcul sur l'ensemble du graphe (par rapport à une structure initialisée de façon aléatoire). On minimise le nombre d'opérations de "remontée" d'éléments puisque plusieurs éléments sont déjà à leur place au lieu d'être à un endroit quelconque de l'arbre.

On peut exploiter cette caractéristique pour l'ensemble des algorithmes de calcul d'itinéraire qui progressent comme une onde dans un graphe à partir d'un point particulier, c'est à dire qui ne traitent le(s) successeur(s) d'un sommet (qui devrait être nommé "prédécesseur" dans le cas présent) que lorsque ce dernier est lié au point de destination cherché par le chemin calculé selon le critère choisi.

Le choix d'autoriser un calcul d'itinéraire selon différents critères pose un problème principal lors d'une restriction du domaine d'étude effectuée en vue d'accélérer l'obtention d'un premier itinéraire. En effet, si la restriction de l'analyse de la zone numérisée à une zone elliptique englobant les points extrêmes apparaît suffisante dans le cas d'un calcul de chemin de plus courte distance, cela n'est plus vrai dans le cas d'un calcul selon un critère de temps, de confort, etc...

Pour illuster cette affirmation, on peut étudier le cas où l'on travaille sur la carte numérisée de Paris. La ceinture de Paris, constituée par le boulevard périphérique, offre théoriquement la possibilité de joindre deux points proches de la périphérie, par un chemin rapide en temps et de confort intéressant. Cependant, cette ceinture sortant de la zone d'étude limitée (dans le cas d'une zone elliptique, telle que décrite précédemment), le premier itinéraire calculé se trouve dans l'impossibilité d'emprunter ces voies et le guidage préliminaire risque donc, avant la fin du calcul sur l'ensemble du graphe, d'aller à l'encontre de la solution finale (voir Fig.2).

On peut minimiser ce genre de problèmes en associant systématiquement lors de chaque calcul dans un domaine restreint, un ensemble d'éléments de contrainte intégrant des informations à caractère universel pour tout calcul d'itinéraire à l'intérieur d'une zone considérée (grands axes, voies rapides, etc...). Cet ensemble de contrainte peut être constitué aussi bien par un ensemble d'éléments de base (noeuds, arcs, ..) que par une couche de données dans le cas où l'on travaille avec une numérisation par niveaux d'importance de voies.

L'exemple présenté ci-dessous a pour rôle d'illustrer un problème classique de calcul d'itinéraire dans un système embarqué. Il détaille la séquence des opérations à suivre pour obtenir un système pertinent et exploitable avec des moyens informatiques grand public (taille réduite du matériel en vue de l'intégration sur véhicule, calculateur relativement peu puissant de type ordinateur personnel, taille de mémoire classique, etc...).

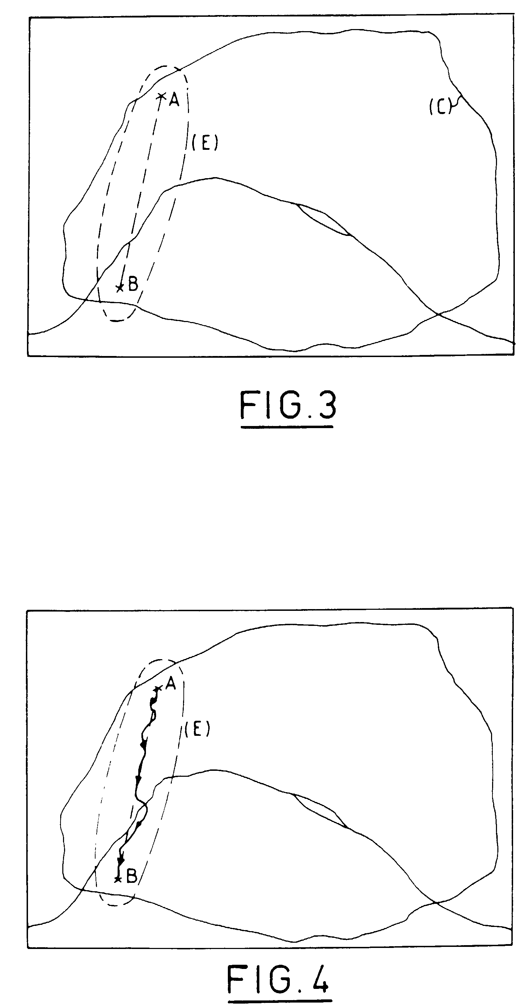

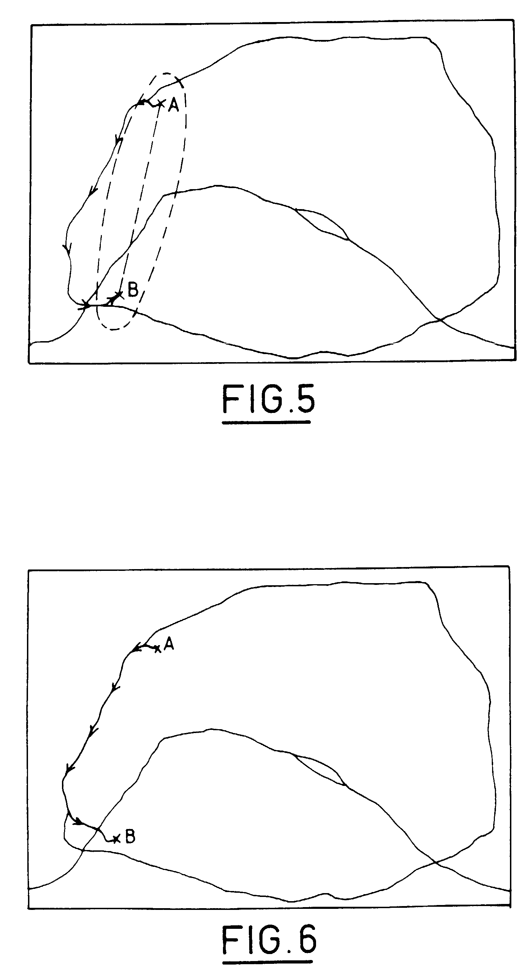

Considérons un point d'origine A et un point de destination B (Fig.3). Lorsque la demande de destination est faite selon le critère du plus court chemin en temps, le véhicule se trouve effectivement au point A. Afin d'accélérer la délivrance des premières informations de guidage, le calcul d'itinéraire est fait sur la zone restreinte elliptique E. Dans le cas où il n'existe pas d'ensemble de contrainte C (par souci de simplification, l'ensemble de contrainte se résume, dans l'exemple, à l'ensemble des noeuds et des arcs constituant les boulevards périphériques intérieur et extérieur), le premier chemin fourni (Fig.4) est très différent du chemin final (Fig.6), tandis qu'il s'en approche assez fidèlement dans le cas contraire (Fig.5).

Lorsque cette première étape est terminée, le véhicule est susceptible de s'être déplacé et donc de ne plus être localisé au point A. Cependant, du fait de la rapidité de cette première phase du calcul de chemin sur un domaine restreint, le véhicule ne peut se trouver qu'en correspondance avec des sommets avoisinant le sommet d'origine A et appartenant donc au domaine d'étude E. Il existe par conséquent, un itinéraire liant sa position réelle à son point de destination et le guidage est donc toujours possible.

Une bonne gestion du calculateur du système de navigation permet ensuite de mettre à profit des "temps morts" de celui-ci pour étendre le calcul d'itinéraire sur l'ensemble du graphe disponible, afin d'optimiser le chemin proposé s'il y a lieu et de se prémunir du non suivi de l'itinéraire recommandé, par le conducteur.

En conclusion, une fonction de navigation doit pouvoir s'exercer avec une même base algorithmique quelle que soit l'échelle à laquelle elle s'applique et quelle que soit la taille de la base de données cartographiques utilisée. Cette vocation d'universalité laisse supposer qu'il faut envisager des solutions capables de traiter des quantités de données réduites afin d'accélérer les traitements initiaux et réutilisables lors d'une extension du calcul à des domaines plus larges.

Ainsi, en cherchant à appliquer et à compléter les solutions théoriques des méthodes mathématiques au monde de l'informatique embarquée, on met en évidence trois caractéristiques au niveau des calculs d'itinéraires développés en vue d'applications à la navigation :
- le calcul d'itinéraire doit être initialisé par rapport au point de destination,
- la structure de données dédiée au calcul d'itinéraire dans une fonction d'aide à la navigation doit permettre la réutilisation des informations issues d'un calcul partiel (sous-ensemble d'éléments),
- la base de données courantes de calcul peut être complétée par des fichiers spécialisés dans le calcul d'itinéraire afin d'optimiser la fonction de navigation avec des ensembles de contrainte, dans lesquels se trouvent des données indispensables à la délivrance d'un chemin proche du chemin optimal selon le critère choisi lors d'une recherche partielle, et qui présentent un caractère universel à prendre en compte pour chaque calcul.

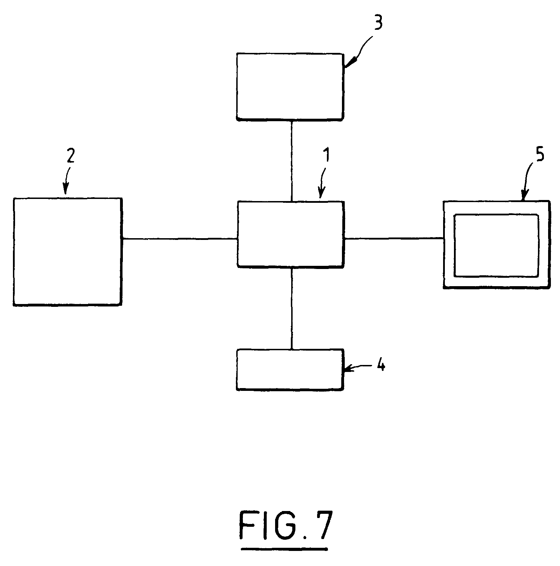

Le dispositif permettant de mettre en oeuvre ce procédé est illustré sur la Fig.7.

Ce dispositif comporte un ensemble à microprocesseur 1 de type connu en soi, relié à une mémoire de masse 2 dans laquelle sont stockées les données cartographiques, à une mémoire de travail 3, à des moyens 4 d'entrée d'informations, par exemple de points d'origine et de destination par un utilisateur et constitués par exemple par un clavier et un dispositif d'affichage d'itinéraire calculé 5.

On notera que les moyens d'entrée de données et le dispositif d'affichage peuvent par exemple être disposés sur la console centrale ou sur le tableau de bord du véhicule, de manière connue en soi.

La mémoire de masse 2 contient sous forme numérisée, toutes les informations relatives à la zone géographique donnée.

Bien entendu, d'autres modes de réalisation de ce dispositif peuvent être envisagés.

## Revendications

1. Procédé de calcul d'un itinéraire de navigation notamment d'un véhicule automobile, dans une zone géographique donnée entre un point d'origine et un point de destination, à l'aide d'un calculateur d'itinéraire (1), dans lequel est chargé au moins un algorithme de calcul d'itinéraire, associé à une base de données cartographiques (2) représentatives de la zone géographique donnée, cette base comportant au moins deux ensembles d'éléments identifiés à savoir un ensemble de noeuds correspondant à des carrefours et un ensemble d'arcs correspondant à des voies aboutissant à ces noeuds, auxquels sont affectées des caractéristiques d'intérêt pour le calcul d'itinéraire, l'algorithme de calcul étant initialisé sur le point de destination, et étant adapté pour calculer un itinéraire en remontant de ce point de destination vers le point d'origine, caractérisé en ce que l'algorithme de calcul est un algorithme à progression d'une onde dans un graphe, associé à une méthode de tri par arbre binaire, et délimite dans un premier temps une zone de calcul restreinte dans la base, puis dans un second temps étend cette zone de calcul au reste de celle-ci, afin de délivrer rapidement un premier itinéraire, en réutilisant les données de calcul relatives au premier itinéraire, lors de l'extension de la zone de calcul au reste de la base, pour affiner le calcul d'itinéraire au fur et à mesure.

2. Procédé selon la revendication 1, caractérisé en ce que l'algorithme de calcul est un algorithme de type DIJKSTRA.

3. Procédé selon la revendication 1, caractérisé en ce que l'algorithme de calcul est un algorithme de type JOHNSON.

4. Procédé selon l'une quelconque des revendications précédentes, caractérisé en ce que les ensembles d'éléments identifiés de la base sont répartis en au moins deux fichiers, l'un contenant des données courantes de calcul et l'autre contenant des données de contrainte représentatives d'informations à caractère universel à prendre compte dans tous les calculs d'itinéraire.

5. Dispositif de calcul d'un itinéraire de navigation notamment d'un véhicule automobile, dans une zone géographique donnée entre un point d'origine et un point de destination, comportant des moyens (4) d'entrée des points d'origine et de destination par un utilisateur dans un calculateur d'itinéraire (1) comportant un ensemble à microprocesseur, dans lequel est chargé au moins un algorithme de calcul d'itinéraire, et relié à une mémoire de masse (2) dans laquelle est chargée une base de données cartographiques représentatives de la zone géographique donnée, cette base comportant au moins deux ensembles d'éléments identifiés à savoir un ensemble de noeuds correspondant à des carrefours et un ensemble d'arcs correspondant à des voies aboutissant à ces noeuds, auxquels sont affectées des caractéristiques d'intérêt pour le calcul d'itinéraire, l'algorithme de calcul étant initialisé sur le point de destination, et étant adapté pour calculer un itinéraire en remontant de ce point de destination vers le point d'origine, et des moyens (5) d'affichage de l'itinéraire calculé, caractérisé en ce que l'algorithme de calcul est un algorithme à progression d'une onde dans un graphe, associé à une méthode de tri par arbre binaire, et délimite dans un premier temps une zone de calcul restreinte dans la base, puis dans un second temps étend cette zone de calcul au reste de celle-ci, afin de délivrer rapidement un premier itinéraire, en réutilisant les données de calcul relatives au premier itinéraire, lors de l'extension de la zone de calcul au reste de la base, pour affiner le calcul d'itinéraire au fur et à mesure.

## Patentansprüche

1. Verfahren zur Berechnung eines Navigationsleitwegs, insbesondere eines Kraftfahrzeugs, in einer vorgegebenen geographischen Zone zwischen einem Ausgangspunkt und einem Zielpunkt mit Hilfe eines Leitwegrechners (1), der mit mindestens einem Leitwegberechnungsalgorithmus bestückt ist, der zu einer Datenbank für kartographische Daten (2) gehört, welche für die vorgegebene geographische Zone repräsentativ sind, wobei diese Bank mindestens zwei Einheiten von Elementen aufweist, und zwar eine Einheit von Knoten, die Kreuzungen entsprechen, und eine Einheit von Bögen, die Wegen entsprechen, welche in diese Knoten münden, denen Merkmale zugeordnet sind, die für die Leitwegberechnung von Interesse sind, wobei der Berechnungsalgorithmus auf dem Zielpunkt initialisiert wird und dafür ausgelegt ist, einen Leitweg durch Zurückverfolgung von diesem Zielpunkt aus zum Ausgangspunkt hin zu berechnen, dadurch gekennzeichnet, daß der Berechnungsalgorithmus ein Algorithmus des Fortschreitens einer Welle in einem Graphen ist, der mit einer Methode zum Sortieren durch einen Binärbaum verknüpft ist und zu einem ersten Zeitpunkt eine beschränkte Berechnungszone in der Bank begrenzt und dann zu einem zweiten Zeitpunkt diese Berechnungszone auf den Rest derselben ausdehnt, um schnell einen ersten Leitweg zu liefern, wobei die zum ersten Leitweg gehörenden Berechnungsdaten bei der Ausdehnung der Berechnungszone auf den Rest der Bank wiederverwendet werden, um die Berechnung des Leitwegs nach und nach zu verfeinern.

2. Verfahren nach Anspruch 1, dadurch gekennzeichnet, daß der Berechnungsalgorithmus ein Algorithmus des Typs DIJKSTRA ist.

3. Verfahren nach Anspruch 1, dadurch gekennzeichnet, daß der Berechnungsalgorithmus ein Algorithmus des Typs JOHNSON ist.

4. Verfahren nach einem der vorstehenden Ansprüche, dadurch gekennzeichnet, daß die Einheiten der identifizierten Elemente der Bank in mindestens zwei Hauptgruppen aufgeteilt werden, wobei die eine laufende Berechnungsdaten enthält und die andere Grenzwertbedingungsdaten enthält, die für Informationen allgemeinen Charakters, welche in allen Leitwegberechnungen berücksichtigt werden müssen, repräsentativ sind.

5. Vorrichtung zur Berechnung eines Navigationsleitwegs, insbesondere eines Kraftfahrzeugs, in einer vorgegebenen geographischen Zone zwischen einem Ausgangspunkt und einem Zielpunkt, welche Mittel (4) zur Eingabe von Ausgangs- und Zielpunkten durch einen Benutzer in einen Leitwegrechner (1), welcher eine Mikroprozessoreinheit aufweist, die mit mindestens einem Algorithmus zur Berechnung eines Leitwegs bestückt ist, und mit einem Massenspeicher (2) verbunden ist, der mit einer Bank kartographischer Daten bestückt ist, welche für die vorgegebene geographische Zone repräsentativ sind, wobei diese Bank mindestens zwei Einheiten identifizierter Elemente aufweist, und zwar eine Einheit von Knoten, die Kreuzungen entsprechen, und eine Einheit von Bögen, die Wegen entsprechen, welche in diese Knoten münden, denen Merkmale zugeordnet sind, welche für die Leitwegberechnung von Interesse sind, wobei der Berechnungsalgorithmus auf dem Zielpunkt initialisiert wird und dafür ausgelegt ist, einen Leitweg durch Zurückverfolgung von diesem Zielpunkt aus zum Ausgangspunkt hin zu berechnen, und Mittel (5) zur Anzeige des berechneten Leitwegs aufweist, dadurch gekennzeichnet, daß der Berechnungsalgorithmus ein Algorithmus des Fortschreitens einer Welle in einem Graphen ist, der mit einer Methode zum Sortieren durch einen Binärbaum verknüpft ist und zu einem ersten Zeitpunkt eine beschränkte Berechnungszone in der Bank begrenzt und dann zu einem zweiten Zeitpunkt diese Berechnungszone auf den Rest derselben ausdehnt, um schnell einen ersten Leitweg zu liefern, wobei die zum ersten Leitweg gehörenden Berechnungsdaten bei der Ausdehnung der Berechnungszone auf den Rest der Datenbank wiederverwendet werden, um die Berechnung des Leitwegs nach und nach zu verfeinern.

## Claims

1. Method for calculating a navigation route in particular of a motor vehicle, in a given geographic area between a point of origin and a destination point, by means of a route calculator (1), in which is loaded at least one route calculation algorithm, associated with a cartographic data base (2) representative of the given geographic area, this base comprising at least two sets of identified elements namely a set of nodes corresponding to crossroads and a set of arcs corresponding to roads leading to these nodes, to which are assigned features of interest for the calculation of the route, the calculation algorithm being initialised on the destination point, and being adapted in order to calculate a route by returning from this destination point towards the point of origin, characterised in that the calculation algorithm is an algorithm with wave progression in a graph, associated with a method of sorting by a binary tree, and defines in a first period of time a restricted calculation area in the base, then in a second period of time extends this calculation area to the remainder of the latter, in order to quickly supply a first route, by re-using the calculation data relating to the first route, at the time of extension of the calculation area to the remainder of the base, in order to progressively refine the route calculation.

2. Method according to Claim 1, characterised in that the calculation algorithm is an algorithm of the DIJKSTRA type.

3. Method according to Claim 1, characterised in that the calculation algorithm is an algorithm of the JOHNSON type.

4. Method according to one of the preceding Claims, characterised in that the sets of identified elements of the base are distributed in at least two files, one containing current calculation data and the other containing constraint data representative of information having a universal nature to be taken into account in all route calculations.

5. Device for the calculation of a navigation route in particular of a motor vehicle, in a given geographic area between a point of origin and a destination point, comprising means (4) for entering the point of origin and destination point by a user into a route calculator (1) comprising an arrangement with a microprocessor, in which is loaded at least one route calculation algorithm, and connected to a mass memory (2) in which is loaded a cartographic data base representative of the given geographic area, this base comprising at least two sets of identified elements, namely a set of nodes corresponding to crossroads and a set of arcs corresponding to roads leading to these nodes, to which are assigned features of interest for the route calculation, the calculation algorithm being initialised on the destination point, and being adapted in order to calculate a route by returning from this destination point towards the point of origin, and means (5) for displaying the calculated route, characterised in that the calculation algorithm is an algorithm with wave progression in a graph, associated with a method of sorting by a binary tree, and defines in a first period of time a restricted calculation area in the base, then in a second period of time extends this calculation area to the remainder of the latter, in order to quickly supply a first route, by re-using the calculation data relating to the first route, at the time of extension of the calculation area to the remainder of the base, in order to progressively refine the route calculation.
